# EUROPÄISCHE PATENTSCHRIFT

(11) **EP 4 021 679 B1**
(45) Veröffentlichungstag und Bekanntmachung des Hinweises auf die Patenterteilung: **06.08.2025**
(21) Anmeldenummer: 20765226.4
(22) Anmeldetag: 27.08.2020
(51) Int. Cl.: B23Q 1/54, B23C 3/12, B23Q 39/02, B23Q 39/00

(54) **VORRICHTUNG ZUM BEARBEITEN VON AUS PROFILSTÜCKEN GESCHWEISSTEN FENSTER- ODER TÜRRAHMEN**
DEVICE FOR MACHINING WINDOW OR DOOR FRAMES WELDED FROM PROFILE PIECES
DISPOSITIF D'USINAGE DE CADRES DE FENÊTRE OU DE PORTE SOUDÉS À PARTIR DE PIÈCES PROFILÉES

(30) Priorität: 29.08.2019 DE 102019123144
(43) Veröffentlichungstag der Anmeldung: 06.07.2022
(73) Patentinhaber: ROTOX Holding GmbH & Co. KG, 65611 Brechen (DE)
(72) Erfinder:
(74) Vertreter: Weckenbrock, Matthias
(86) Internationale Anmeldenummer: PCT/EP2020/073916
(87) Internationale Veröffentlichungsnummer: WO 2021/037950

(56) Entgegenhaltungen:
- EP-A2- 1 291 101
- DE-A1- 10 213 778
- DE-A1- 102016 006 791
- US-A1- 2015 063 936

## Beschreibung

Die Erfindung bezieht sich auf eine Vorrichtung zum Bearbeiten von aus Profilstücken geschweißten Rahmen, wie beispielweise Fenster- oder Türrahmen aus Kunststoff, mit wenigstens einem Bearbeitungskopf und daran angeordneten Bearbeitungswerkzeugen, welche in die jeweilige Bearbeitungsposition an den Rahmen zustellbar sind.

Eine solche Bearbeitungsvorrichtung ist bspw. aus der US 2007/0234550 A1 bekannt. Diese Vorrichtung weist mehrere Bearbeitungswerkzeuge auf, die an einem Werkzeugträger gehalten sind, der wiederum in zwei senkrecht aufeinander stehenden Richtungen verfahrbar ist. Zusätzlich ist ein seitlich des Werkzeugträgers angeordneter zweiter verfahrbarer Werkzeugträger mit einem Bearbeitungswerkzeug für die Bearbeitung eines Profilschenkels des Fensterrahmens vorgesehen. Die Verfahrbarkeit des zweiten Werkzeugträgers erfolgt in Diagonalrichtung des in der Maschine eingespannten Rahmenecks, so dass sowohl eine Eckenbearbeitung des Rahmens als auch eine Bearbeitung eines Profilschenkels mit einer einzigen Maschine möglich ist.

Aus der WO 2015/031793 A1 ist eine Fensterbearbeitungsmaschine bekannt, mit an einem Roboterarm gehaltenem Antrieb, der auf seinen gegenüberliegend vorstehenden Abtriebswellen eine Aufnahme für Werkzeuge, wie bspw. ein Sägeblatt auf der einen Seite und ein Fräser oder Bohrer auf der anderen Seite, aufweist. Durch die Anordnung der Bearbeitungseinheit an einem Roboterarm sind die Werkzeuge in den drei Raumrichtungen verfahrbar und zusätzlich verdrehbar.

Aus der US 2015/063936 A1 sind ein Fensterverarbeitungssystem und - verfahren zur Herstellung von Fensterrahmen oder Flügeln bekannt. Das System umfasst einen Gelenkarm mit mehreren Elementen und Armen, um eine Bewegung um mehrere Achsen zu ermöglichen, die durch den Gelenkarm definiert sind. Das System weist ferner eine Werkzeughalterung auf, die mit einem äußersten Element der Vielzahl von Elementen gekoppelt ist, wobei die Werkzeughalterung mehrere Werkzeuge zum Durchführen von Reinigungsvorgängen an einem Fensterrahmen oder Flügel während des Gebrauchs vorsieht.

Aus der DE 102 13 778 A1 ist eine Werkzeugmaschine mit einem Maschinengestell, eine an dem Maschinengestell gehaltene und um eine Spindelachse drehbare Arbeitsspindel zur Aufnahme eines Werkstücks und einen ersten Werkzeugträger mit einem um eine Achse gegenüber einem Lagergehäuse drehbaren Werkzeugträgerkopf bekannt. Die Arbeitsspindel und der Werkzeugträgerkopf sind relativ zueinander mittels einer Steuerung mindestens in Richtung einer X-Achse und einer Z-Achse gesteuert bewegbar und die Arbeitsspindel ist um die Spindelachse als gesteuerte C-Achse drehbar positionierbar.

Die EP 1 291 101 A2 betrifft eine Werkzeugmaschine mit einer Werkzeugspindel zur Aufnahme eines Werkstücks sowie einen Mehrfachwerkzeugträger und eine Maschinensteuerung, mit welcher die Werkstückspindel und der Werkzeugträger dreidimensional relativ zueinander bewegbar sind und mit welcher das Werkstück um eine Werkstückspindelachse als gesteuerte C-Achse drehpositionierbar ist.

Aus der DE 10 2016 006791 A1 ist eine Maschine zur Bearbeitung von Werkstücken bekannt, welche wenigstens eine Werkstückspindel aufweist, über die ein zu bearbeitendes Werkstück um eine Werkstück-Drehachse drehend antreibbar ist. Ein der Werkstückspindel gegenüberliegender Schwenkkopf ist um eine Schwenkachse verschwenkbar und trägt mindestens zwei Werkzeugspindeln, an denen jeweils zumindest ein Bearbeitungswerkzeug um eine Werkzeug-Drehachse drehend antreibbar gehalten ist.

Nachteilig bei den bekannten Vorrichtungen ist der konstruktive Aufwand für die Verfahrbar- und Verdrehbarkeit der Werkzeuge an einem Roboterarm bzw. der Aufwand durch die Anordnung eines zweiten verfahrbaren Werkzeugträgers und die vergleichsweise geringe Anzahl an Werkzeugen sowie der hohe programmier- und softwaretechnische Aufwand für die Positionierung der Werkzeuge.

Davon ausgehend liegt der Erfindung die Aufgabe zugrunde, eine Vorrichtung der eingangs genannten Art dahingehend weiterzuentwickeln, dass bei einfachem konstruktiven Aufbau und zuverlässigem Betrieb eine Bearbeitung sowohl der Eckverbindungen der Rahmen als auch eine Bearbeitung der Rahmenschenkel, beispielsweise zur Erzeugung von profilierten Durchbrüchen, Bohrungen und dergleichen, ermöglicht ist.

Gelöst wird diese Aufgabe durch eine Vorrichtung mit den Merkmalen des Anspruchs 1. Vorteilhafte Ausgestaltungen sind Gegenstand der Unteransprüche.

Die erfindungsgemäße Vorrichtung zum Bearbeiten von aus Profilstücken geschweißten Rahmen, wie bspw. Fenster- oder Türrahmen aus Kunststoff weist wenigstens einen Bearbeitungskopf mit daran angeordneten Werkzeugen auf, welche in die jeweilige Bearbeitungsposition an dem zu bearbeitenden Rahmen zustellbar sind.

Der Bearbeitungskopf ist um eine Achse verschwenkbar und weist eine zu dieser Schwenkachse in einem Winkel angeordnete Positionierwelle auf, an welcher die Bearbeitungswerkzeuge angeordnet sind.

Durch die Verschwenkbarkeit des Bearbeitungskopfes und die Verdrehbarkeit der die Werkzeuge tragenden Positionierwelle ist sowohl eine Eckbearbeitung des Rahmens als auch eine Bearbeitung eines Profilschenkels mit einer einzigen Vorrichtung und in einer einzigen Aufspannposition des Rahmens ermöglicht. Beispielsweise wird der Bearbeitungskopf für die Bearbeitung eines Rahmenecks in die Ausgangsstellung gebracht und durch Verschwenken des Bearbeitungskopfes um die Schwenkachse mit seiner die Bearbeitungswerkzeuge tragenden Positionierwelle diagonal auf das Rahmeneck ausgerichtet. Durch Drehen der Positionierwelle wird das gewünschte Bearbeitungswerkzeug ausgewählt und durch Verfahren des Bearbeitungskopfes auf das Rahmeneck zu und/oder weg werden die Außen- und/oder Innenecke sowie die Sichtflächen bearbeitet. Wenn das Rahmeneck beispielsweise durch Einsatz weiterer Bearbeitungswerkzeuge abgearbeitet ist, kann eine Bearbeitung eines Rahmen- oder Profilschenkels erfolgen. Hierfür kann der Bearbeitungskopf in seine Ausgangsstellung verfahren oder gebracht werden, durch Verschwenken um die Schwenkachse mit Positionierwelle senkrecht zu dem zu bearbeitenden Profilschenkel ausgerichtet, das gewünschte Werkzeug durch Drehen der Positionierwelle ausgewählt und durch Zufahren oder Zustellen an den Profilschenkel in Arbeitsstellung gebracht werden.

Im Falle von Wasserschlitzen oder dergleichen Durchbrüchen, etwa zum Einbringen von Bohrungen, kann der Bearbeitungskopf mit dem den jeweiligen Rahmenschenkel angreifenden Bearbeitungswerkzeug längs des Rahmenschenkels verfahren werden. Selbstverständlich ist auch die umgekehrte Arbeitsweise möglich, wonach zunächst der Rahmenschenkel und danach die Rahmenecken bearbeitet werden, ebenso wie eine Kombination der Bearbeitungsschritte.

Damit ist eine vollständige Bearbeitung von Fenster- und Türrahmen erreicht.

Die erfindungsgemäße Vorrichtung weist eine hohe Flexibilität auf. Die Bearbeitung am Profilstab bzw. Rahmenschenkel lässt sich konstruktiv einfach realisieren.

Nach einer ersten Ausführungsform ist es vorgesehen, dass die Positionierwelle mit daran angeordneten Bearbeitungswerkzeugen mittels eines Stellantriebs in Drehrichtung positionierbar ist. Hierdurch ist eine schnelle und präzise Auswahl des jeweiligen Bearbeitungswerkzeuges und eine exakte Zustellung an das Rahmeneck oder an den jeweils zu bearbeitenden Rahmenschenkel erreicht.

Vorzugsweise sind die Schwenkachse und die Achse der Positionierwelle im Wesentlichen senkrecht zueinander ausgerichtet, so dass alle Bearbeitungspositionen am Rahmen und am Rahmeneck anfahrbar sind. Bevorzugt steht die Schwenkachse senkrecht auf der Aufspannebene des Rahmens, während die Achse der Positionierwelle parallel zur Rahmenebene verläuft.

Nach einer weiteren Ausgestaltung der Erfindung ist es vorgesehen, dass der Bearbeitungskopf zusätzlich in drei Achsen verfahrbar, vorzugsweise an einem in drei Achsen verfahrbaren Schlitten gehalten ist. So kann der Schlitten mit Bearbeitungskopf gegenüber der Aufspannebene des Rahmens schräg gestellt werden, was die universelle Einsetzbarkeit der Vorrichtung nochmals erhöht. So kann jede Position am Rahmen mit den unterschiedlichsten Werkzeugen angefahren werden.

Erfindungsgemäß ist es vorgesehen, dass sich die Positionierwelle auf beiden Seiten des Bearbeitungskopfes erstreckt, mit Bearbeitungswerkzeugen an beiden Endbereichen der Positionierwelle. Hierdurch können eine Vielzahl von Werkzeugen an den Enden der Positionierwelle angeordnet werden, um unterschiedlichste Rahmengeometrien und -spezifikationen hinsichtlich von Durchbrüchen, Bohrungen, am Rahmenschenkel bearbeiten zu können. Durch die Anordnung von verschiedenen Werkzeugen an gegenüberliegenden Enden der Positionierwelle ergibt sich ein kompakter Aufbau und es kann eine hohe Anzahl an Werkzeugen realisiert werden. Auch an einem Querstab des Rahmens ist auf diese Weise eine komplette Bearbeitung möglich.

Ein anderer Gedanke der Erfindung sieht vor, dass die Positionierwelle ihrerseits relativ zum Bearbeitungskopf in einer Achsrichtung verstellbar ausgebildet ist. Hierdurch ist eine noch universellere Zustellung von Bearbeitungswerkzeugen möglich, auch an sonst maschinenseitig schwer zugänglichen Stellen des Rahmens. Dabei können die Werkzeuge auf beiden Positionierwellenenden angeordneten Werkzeugträgern angeordnet sein, wodurch die Vorrichtung an beliebige Abmessungen von Profilstücken und unterschiedlichen Anforderungen anpassbar ist.

Denkbar ist natürlich auch, dass feststehende und/oder motorisch angetriebene Werkzeuge vorgesehen werden, was ebenfalls die Vielfältigkeit der Bearbeitungsmöglichkeiten erhöht.

Erfindungsgemäß sind die Achsen der Bearbeitungswerkzeuge senkrecht zur Achse der Positionierwelle ausgerichtet, was eine Kollision von gerade nicht benötigten Werkzeugen mit den zu bearbeitenden Rahmen vermindert.

In die gleiche Richtung zielt auch die erfindungsgemäße Maßnahme, dass jeweils eines der Werkzeuge zumindest in einer Drehrichtung des zugeordneten Positionierwellenendes gegenüber dem Bearbeitungskopf zumindest bereichsweise vorsteht, so dass das jeweilige Bearbeitungswerkzeug frei zum Einsatz kommen kann, ohne dass eine Kollision zwischen Bearbeitungskopf und Werkstück auftritt.

Besonders vorteilhaft nach der Erfindung ist es, dass wenigstens ein motorischer Antrieb, insbesondere ein elektrischer Antrieb, für die Bearbeitungswerkzeuge vorgesehen ist, mit einer durchgehenden Abtriebswelle und auf beiden Wellenenden angeordneten Werkzeughaltern für rotierende Bearbeitungswerkzeuge. Hierdurch können mit einem gemeinsamen Antrieb auf gegenüberliegenden Seiten der Abtriebswelle angeordnete Werkzeughalter für rotierende Bearbeitungswerkzeuge vorgesehen werden, was den technischen Aufwand für den Antrieb der Bearbeitungswerkzeuge erheblich reduziert.

Im Falle, dass an den Enden der Positionierwelle wenigstens zwei motorische Antriebe für Bearbeitungswerkzeuge vorgesehen sind, so sind diese nach der Erfindung in Axialrichtung der Positionierwelle hintereinander angeordnet und mit ihren Werkzeugachsen im Winkel, vorzugsweise in einem rechten Winkel, zueinander ausgerichtet. Hierdurch ist eine besonders kompakte Bauform erreicht, ohne dass die gerade nicht im Einsatz befindlichen Werkzeuge mit dem Werkstück kollidieren.

Die Positionierung der Positionierwelle erfolgt vorzugsweise CNC-gesteuert, so dass die Werkzeugstellung ohne Pneumatik nur mittels des CNC-Programms erfolgen kann und eine hohe Präzision und Reproduzierbarkeit ermöglicht.

Für eine besonders geringe Taktzeit bei der Bearbeitung von Rahmen ist es vorgesehen, dass wenigstens zwei Bearbeitungsköpfe zur vorzugsweise gleichzeitigen Bearbeitung der Ecken und/oder Seitenprofile des Rahmens vorgesehen sind. Denkbar ist natürlich auch, dass auf beiden Seiten des zu bearbeitenden Rahmens jeweils zwei Bearbeitungswerkzeuge vorgesehen sind, so dass eine nochmalige Reduktion der Taktzeit für die Bearbeitung von Rahmen erreicht ist.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Es zeigen:
- Figur 1: eine mögliche Vorrichtung zur Bearbeitung von Rahmen mit zwei Schlitten in einer Ausgangsstellung,
- Figur 2: eine vergrößerte Darstellung eines Bearbeitungskopfes gemäß Figur 1,
- Figur 3: eine Teildarstellung der Vorrichtung gemäß Figur 1 mit Bearbeitungsköpfen und Profilspannung in einer Ausgangsstellung,
- Figur 4: die Vorrichtung gemäß Figur 3 in Arbeitsstellung für die Inneneckbearbeitung,
- Figur 5: eine weitere Arbeitsstellung der Vorrichtung zum Inneneckfräsen,
- Figur 6: die Vorrichtung gemäß den vorangegangenen Figuren in einer Arbeitsstellung zur Bearbeitung an einem Profilschenkel bzw. einem Querstab des Rahmens und
- Figur 7: die Vorrichtung gemäß den vorangegangenen Figuren in einer Arbeitsstellung zur Bearbeitung eines Längsstabes des Rahmen.

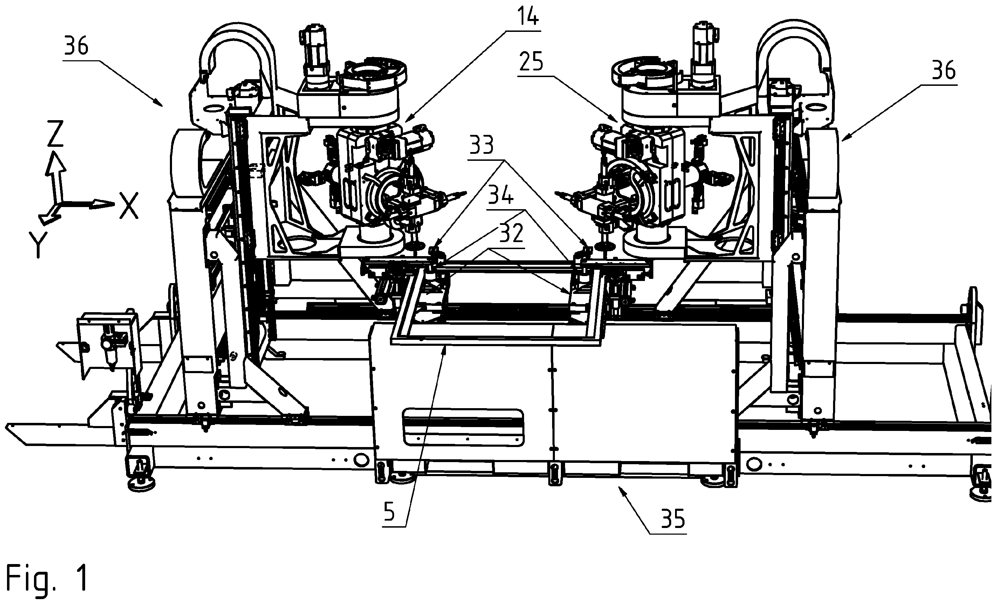

Figur 1 zeigt in einer Gesamtansicht eine Vorrichtung zur Bearbeitung des Eckbereichs von Fenster- oder Türrahmen 5, welche in der gleichen Aufspannposition des Rahmens 5 eine Bearbeitung sowohl der Rahmenecke als auch der Profilschenkel ermöglicht.

Der Rahmen 5 besteht aus zuvor auf Gehrung geschnittenen und danach an den Ecken verschweißten Kunststoffprofilstücken bzw. Rahmenschenkeln 1, 2, 3, 4 mit Längs- und Querstäben. Die sich beim Schweißen ergebende und allein schon aus optischen Gründen zu bearbeitende Schweißnaht im Bereich einer Ecke läuft unter einem Winkel von 45° zu den miteinander verbundenen Rahmenschenkeln bzw. Profilstücken 1 bis 4.

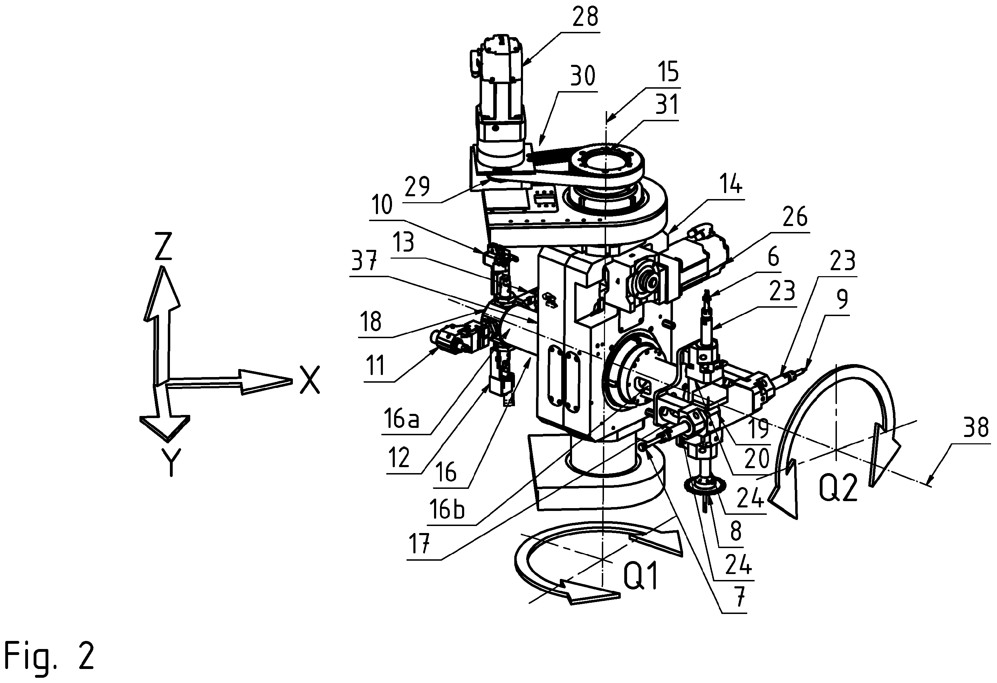

Die Bearbeitung der Eckverbindung erfolgt mittels Fräs-, Abstech- oder beispielsweise Bohrwerkzeugen 6 bis 13. Um die Bearbeitungswerkzeuge 6 bis 13 in Arbeitsposition an den jeweils zu bearbeitenden Eckbereichen des Rahmens 5 zu bringen, müssen die Bearbeitungswerkzeuge 6 bis 13 horizontal bzw. parallel zu einer Aufspannebene 27 des Rahmens 5 in einer Aufnahme der Bearbeitungsvorrichtung sowohl in XY-Richtung als auch in Z-Richtung senkrecht zur Aufspannebene 27 verfahrbar sein. In den Figuren 1 und 2 sind jeweils die X-, Y- und Z-Richtungen eingezeichnet. Zusätzlich sind in Figur 2 die Dreh- bzw. Schwenkrichtungen Q1 und Q2 angedeutet. Hierzu sind in einem in Figur 1 gezeigten Maschinengestell 35 zwei in X-Richtung verfahrbare Schlitten 36 vorgesehen, an welchen je ein in drei Raumrichtungen verfahrbarer Bearbeitungskopf 14, 25 gehalten ist. Denkbar ist es auch, dass zwei auf einer Seite des Rahmens zum Einsatz kommende Bearbeitungsköpfe 14, 25 jeweils an dem Schlitten 36 angeordnet sind. Die Bewegung des Schlittens 36 kann mittels Schubantrieben, wie Schritt- oder Spindelmotoren oder beispielsweise druckmittelbetätigten Kolbenzylindereinheiten erfolgen. Durch die Bewegung des Bearbeitungskopfes 14, 25 kann die Bearbeitung sowohl der Ober- als auch der Unterseite des eingespannten Rahmens 5 erfolgen.

Bei dem hier gewählten Ausführungsbeispiel sind als Bearbeitungswerkzeuge sowohl feststehende Werkzeuge 10 bis 13, wie beispielsweise Abstechmesser zum Entfernen der im Eckbereich des Rahmens 5 beim Schweißen entstandenen Schweißraupe, vorgesehen, ebenso wie rotierende Werkzeuge 6 bis 9, wie beispielsweise Bohrer zur Erzeugung einer Dichtnut, Scheibenfräser zum Abtragen der Schweißraupe am Außeneck des Rahmens 5 und dergleichen.

Zur Bearbeitung der Profilschenkel bzw. Profilstücke 1 bis 4, beispielsweise zum Einbringen von Bohrungen in die Außenseite der Profilschenkel oder zum Erzeugen von Langlöchern, kommen die Bearbeitungswerkzeuge 6 bis 9 zum Einsatz.

Der beispielsweise an einem verfahrbaren Schlitten 36 gelagerte Bearbeitungskopf 14, wie er vergrößert in Figur 2 dargestellt ist, ist um eine bei dem hier gewählten Ausführungsbeispiel vertikale Achse 15 verschwenkbar, wie dies durch den mit Q1 beschrifteten Doppelpfeil in Figur 2 symbolisiert ist. Hierfür ist ein Stellantrieb 28 an dem Schlitten 36 oder Support angeordnet, welcher bei dem hier gewählten Ausführungsbeispiel über einen Zahnriemen 30 die Verschwenkung des Bearbeitungskopfes 14 relativ zum Schlitten 36 bewirkt.

Der Stellantrieb 28 kann beispielsweise einen Elektromotor aufweisen, welcher über ein an seiner Abtriebswelle angeordnetes Ritzel 29 den Zahnriemen 30 antreibt, der über ein Zahnrad 31 den Bearbeitungskopf 14 um die Schwenkachse 15 verschwenkt.

Im Bearbeitungskopf 14 ist weiterhin eine Positionierwelle 16 gelagert, an welcher die Bearbeitungswerkzeuge 6 bis 13 angeordnet sind. Die Positionierwelle 16 ist mittels eines Stellantriebes 26 in Drehrichtung verstellbar. Die Schwenkachse 38 der Positionierwelle 16 steht bei dem hier gewählten Ausführungsbeispiel senkrecht zur Schwenkachse 15 des Bearbeitungskopfes 14, wobei die Schwenkachse 15 ihrerseits senkrecht zur Aufspannebene 27 ausgerichtet ist.

Wie insbesondere aus Figur 2 ersichtlich ist, erstreckt sich die Positionierwelle 16 zu beiden Seiten des Gehäuses 37 des Bearbeitungskopfes 14 und trägt an ihren Enden 16a, 16b die Bearbeitungswerkzeuge 6 bis 13. Dabei sind an beiden Enden 16a, 16b der Positionierwelle 16 Werkzeugträger 17, 18 angeordnet, an welchen die Werkzeuge 6 bis 13, vorzugsweise auswechselbar, gehalten sind.

Wie aus Figur 2 hervorgeht, weist die Positionierwelle 16 eine Schwenkachse 38 auf, um welche die Positionierwelle 16 schwenkbar angeordnet ist, wie durch den mit Q2 bezeichneten Doppelpfeil symbolisiert ist.

Wie den Figuren zu entnehmen, sind sowohl feststehende Werkzeuge 10 bis 13, wie beispielsweise Abziehmesser, an dem Werkzeugträger 18 vorgesehen, als auch motorisch angetriebene Bearbeitungswerkzeuge 6 bis 9 an dem anderen Ende 16b der Positionierwelle 16 an dem Werkzeugträger 17 angeordnet.

Im Falle der motorisch angetriebenen Bearbeitungswerkzeuge 6 bis 9 können ihre Achsen 21, 22 parallel oder auch senkrecht zur Positionierwelle 16 ausgerichtet sein.

Wie insbesondere Figur 2 zu entnehmen, sind bei dem hier gewählten Ausführungsbeispiel an einem Ende 16b zwei motorische Antriebe 19, 20 für Bearbeitungswerkzeuge 6 bis 9 vorgesehen, welche in Axialrichtung der Positionierwelle 16 hintereinander angeordnet sind und mit ihren Werkzeugachsen im rechten Winkel zueinander ausgerichtet sind. Die motorischen Antriebe 19, 20 weisen eine durchgehende Abtriebswelle auf, mit an beiden Wellenenden 23, 24 angeordneten Werkzeughaltern für die rotierenden Bearbeitungswerkzeuge 6 bis 9. Hierdurch können mit einem Antrieb jeweils zwei Bearbeitungswerkzeuge 6, 7 bzw. 8, 9 angetrieben werden.

Für die Positionierung der Positionierwelle 16 ist eine CNC-Steuerung vorgesehen, welche eine genaue Positionierung der Werkzeuge 6 bis 13 ermöglicht.

Für die Bearbeitung wird der Rahmen 1 in einer Rahmenauflage 32 platziert und mittels Spann- und Zentriermitteln 33, 34 fixiert.

Die Spannmittel 33 können beispielsweise Niederhalter sein, welche den Rahmen 5 auf die Auflage 32 des Maschinengestells 35 aufspannen. Zusätzlich sind Zentriermittel 34 vorgesehen, welche an der Innenseite des Rahmens 5 bzw. der Profilschenkel 1 bis 4 angreifen und den Rahmen 5 zentrieren und gegen Verschieben in der Aufspannebene 27 sichern.

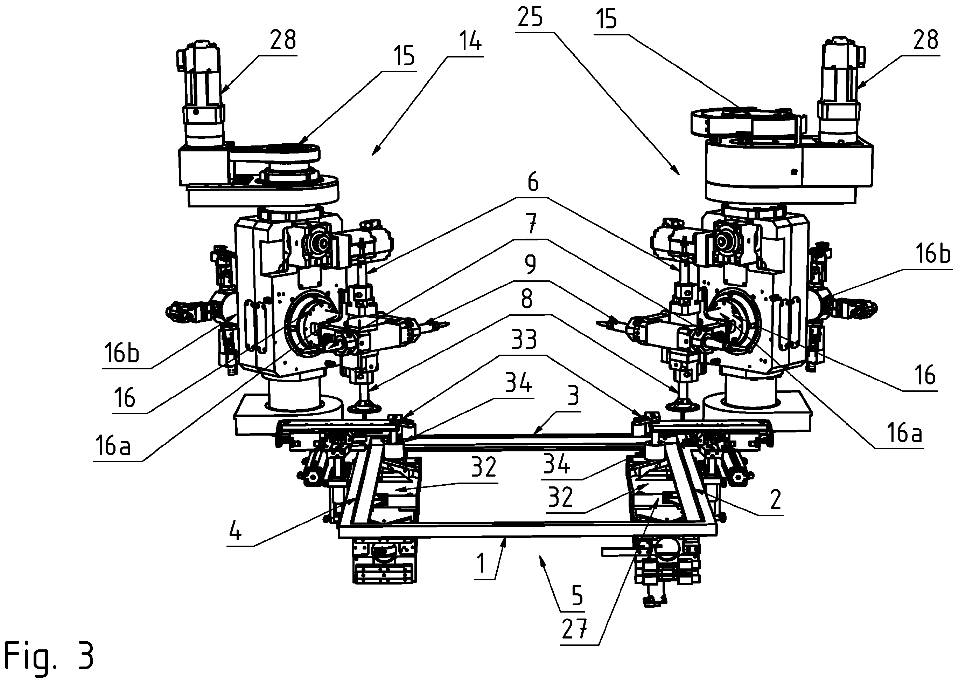

Für die Bearbeitung selbst werden zunächst die Bearbeitungsköpfe 14 in Stellung gebracht. Hierzu werden beispielsweise die den jeweiligen Bearbeitungskopf 14 tragenden Schlitten 36 an den zu bearbeitenden Rahmen 5 zugestellt. Sodann wird beispielsweise für die Eckbearbeitung der jeweilige Bearbeitungskopf 14 um die Schwenkachse 15 mittels des Stellantriebes 28 diagonal zum Rahmen, beispielsweise um 45°, verschwenkt. Danach, vorzugsweise gleichzeitig, erfolgt die Anwahl des gewünschten Werkzeuges 6 bis 13 für die Eckbearbeitung durch eine Drehbewegung der Positionierwelle 16. In Figur 3 ist die Stellung der Bearbeitungsköpfe 14 für die Inneneckbearbeitung mit einem Scheibenfräser gezeigt.

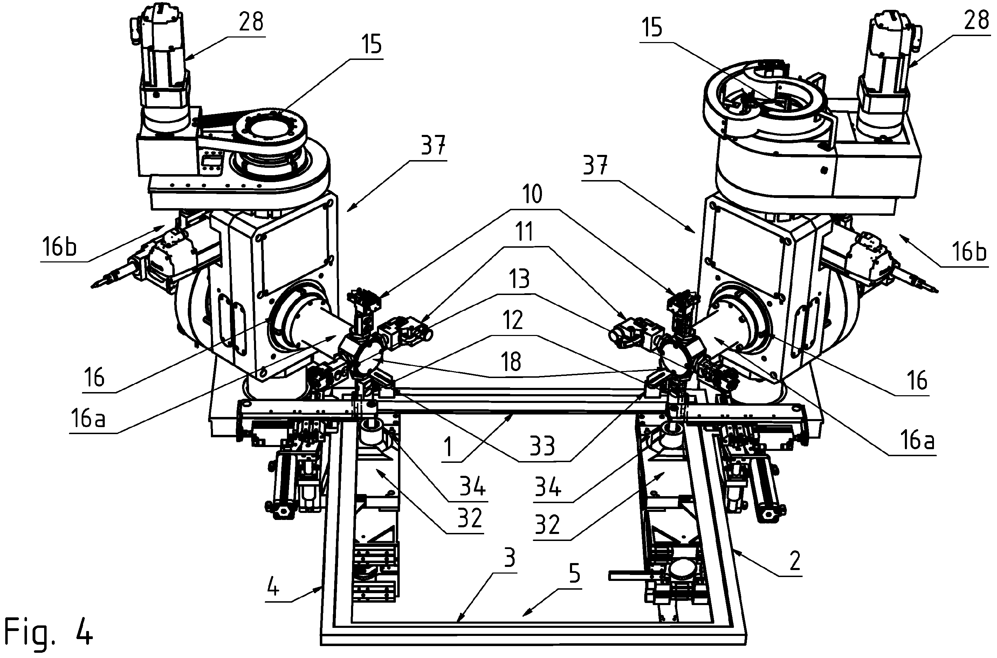

Sodann wird der entsprechende Bearbeitungskopf 14 mit Werkzeugen 6 bis 13 wieder in eine Ausgangsstellung gebracht und durch Verdrehen der Positionierwelle 16 und/oder Verdrehen des Bearbeitungskopfes 14, 25 das nächste Bearbeitungswerkzeug 6 bis 13 angewählt. So ist in Figur 4 die Bearbeitung des Rahmenecks mit einem als Ziehmesser ausgebildeten Bearbeitungswerkzeug 12 zu erkennen.

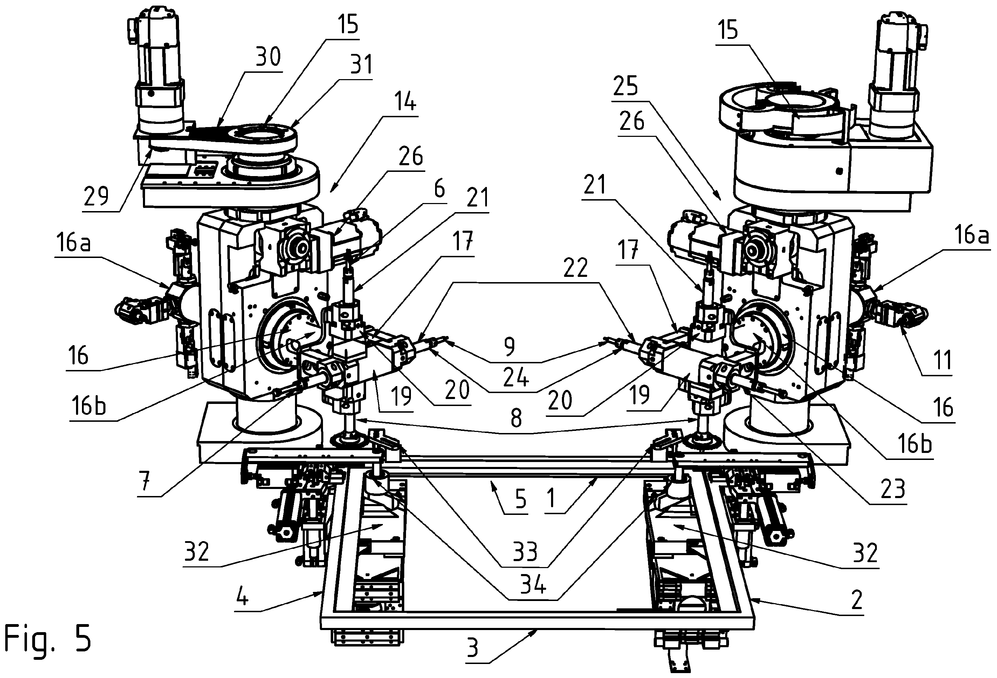

In Figur 5 sind die Bearbeitungsköpfe 14, 25 gegenüber der Stellung in Figuren 3, 4 um die Schwenkachse 15 um 180° gedreht, so dass nunmehr ein Scheibenfräser 8 zum Inneneckfräsen zum Einsatz kommt.

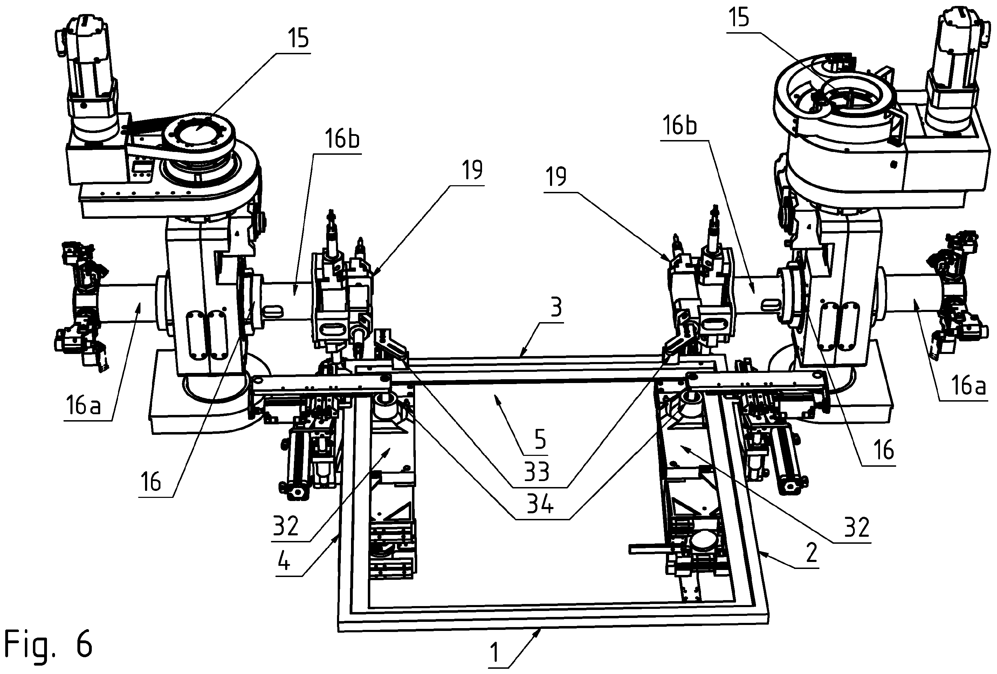

Bei der Bearbeitungssituation gemäß Figur 6 ist der Bearbeitungskopf 14, 25 mit seiner Positionierwelle 16 parallel zum Profilstück 2 ausgerichtet, also gegenüber der Stellung gemäß Figur 5 nochmals um 45° verschwenkt, so dass nunmehr die Außenkontur des Rahmens 5 mittels einer Konturfräserscheibe oder beispielsweise mittels eines Formfräsers 6, 7 bearbeitet werden kann.

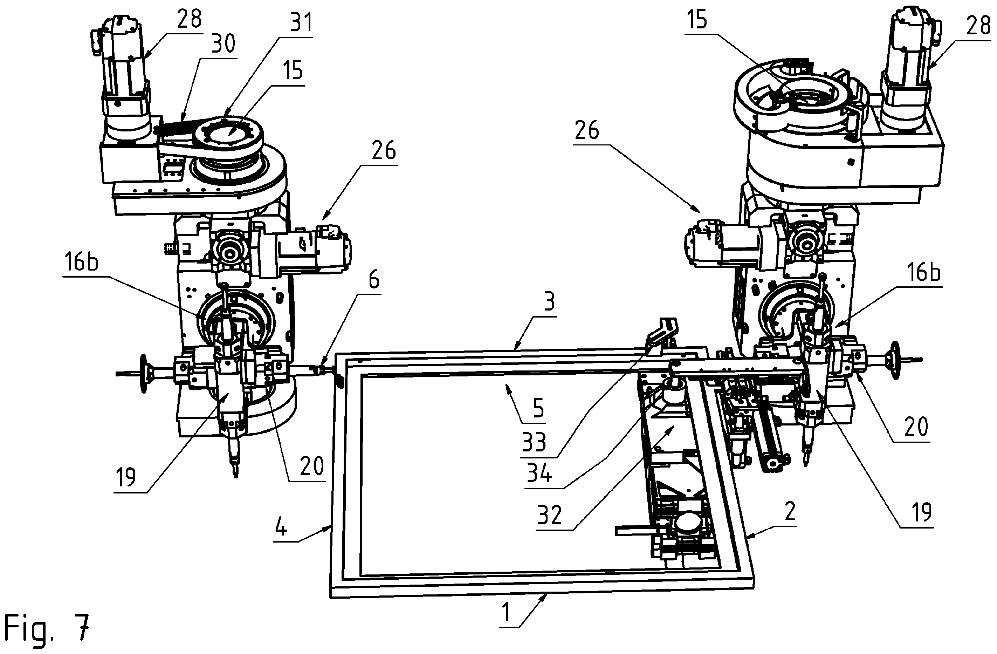

In Figur 7 sind die Arbeitsschritte mit anderen Werkzeugen gezeigt, wie beispielsweise eine Bearbeitung des Profilstückes 1 bis 4 zum Einbringen von Wasserschlitzen mittels eines Fräsers 6 längs des Profilstückes 4.

Die erfindungsgemäße Vorrichtung ermöglicht ein Höchstmaß an Flexibilität und erlaubt zudem ein zügiges Anpassen der Vorrichtung an unterschiedlichste Abmessungen des jeweils zu bearbeitenden Rahmens 5.

Die Erfindung ist nicht nur auf eine Zweikopf-Bearbeitung beschränkt, sondern es kann auch eine Vierkopf-Bearbeitungsvorrichtung vorgesehen sein, mit mehreren, insbesondere zwei Bearbeitungsköpfen 14, 25.

### Bezugszeichenliste

- 1: Profilstück
- 2: Profilstück
- 3: Profilstück
- 4: Profilstück
- 5: Fenster- oder Türrahmen
- 6: Bearbeitungswerkzeug
- 7: Bearbeitungswerkzeug
- 8: Bearbeitungswerkzeug
- 9: Bearbeitungswerkzeug
- 10: Bearbeitungswerkzeug
- 11: Bearbeitungswerkzeug
- 12: Bearbeitungswerkzeug
- 13: Bearbeitungswerkzeug
- 14: Bearbeitungskopf
- 15: Schwenkachse
- 16: Positionierwelle
- 16a: Positionierwellenende
- 16b: Positionierwellenende
- 17: Werkzeugträger
- 18: Werkzeugträger
- 19: Antrieb
- 20: Antrieb
- 21: Werkzeugachse
- 22: Werkzeugachse
- 23: Wellenende
- 24: Wellenende
- 25: Bearbeitungskopf
- 26: Stellantrieb
- 27: Aufspannebene
- 28: Stellantrieb
- 29: Ritzel
- 30: Zahnriemen
- 31: Zahnrad
- 32: Rahmenauflage
- 33: Spannmittel
- 34: Zentriermittel
- 35: Maschinengestell
- 36: Schlitten
- 37: Gehäuse
- 38: Schwenkachse

- X: Achse
- Y: Achse
- Z: Achse

- Q1, Q2: Dreh- bzw. Schwenkachse

## Patentansprüche

1. Vorrichtung zum Bearbeiten von aus Profilstücken (1, 2, 3, 4) geschweißten Rahmen, wie bspw. Fenster- oder Türrahmen (5) aus Kunststoff, mit wenigstens einem Bearbeitungskopf (14, 25) und daran angeordneten Bearbeitungswerkzeugen (6, 7, 8, 9; 10, 11, 12, 13), welche in die jeweilige Bearbeitungsposition an den Rahmen (5) zustellbar sind, wobei der Bearbeitungskopf (14, 25) um eine Achse (15) verschwenkbar ist und eine zur Schwenkachse (15) in einem Winkel angeordnete Positionierwelle (16) aufweist, an welcher die Bearbeitungswerkzeuge (7 - 13) angeordnet sind, **dadurch gekennzeichnet, dass** sich die Positionierwelle (16) auf beiden Seiten des Bearbeitungskopfes (14, 25) erstreckt mit Bearbeitungswerkzeugen (7 - 13) an beiden Endbereichen (16a, 16b) der Positionierwelle (16), wobei die Achsen (21, 22) der Bearbeitungswerkzeuge (7 - 13) senkrecht zur Achse der Positionierwelle (16) ausgerichtet sind.

2. Vorrichtung nach Anspruch 1, **dadurch gekennzeichnet, dass** die Positionierwelle (16) mit daran angeordneten Bearbeitungswerkzeugen (7 - 13) mittels eines Stellantriebes (26) in Drehrichtung positionierbar ist.

3. Vorrichtung nach Anspruch 1 oder 2, **dadurch gekennzeichnet, dass** die Schwenkachse (15) und die Achse der Positionierwelle (16) im Wesentlichen senkrecht zueinander ausgerichtet sind.

4. Vorrichtung nach einem der vorhergehenden Ansprüche, **dadurch gekennzeichnet, dass** die Positionierwelle (16) eine Schwenkachse (38) zum Verschwenken der Positonierwelle (16) aufweist.

5. Vorrichtung nach einem der vorhergehenden Ansprüche, **dadurch gekennzeichnet, dass** die Schwenkachse (15) senkrecht zur Aufspannebene für den Rahmen und die Achse der Positionierwelle (16) parallel zur Aufspannebene ausgerichtet sind.

6. Vorrichtung nach einem der vorhergehenden Ansprüche, **dadurch gekennzeichnet, dass** der Bearbeitungskopf (14) in drei Achsen (X, Y, Z) verfahrbar, vorzugsweise an einem in drei Achsen (X,Y,Z) verfahrbaren Schlitten (36) gehalten ist.

7. Vorrichtung nach einem der vorhergehenden Ansprüche, **dadurch gekennzeichnet, dass** die Positionierwelle (16) relativ zum Bearbeitungskopf (14, 25) in ihrer Achsrichtung verstellbar ausgebildet ist.

8. Vorrichtung nach einem der vorhergehenden Ansprüche, **dadurch gekennzeichnet, dass** die Werkzeuge (7 - 13) an auf beiden Positionierwellenenden (16a, 16b) angeordneten Werkzeugträgern (17, 18) angeordnet sind.

9. Vorrichtung nach einem der vorhergehenden Ansprüche, **dadurch gekennzeichnet, dass** feststehende und/oder motorisch angetriebene Werkzeuge (10 - 13 bzw. 6 - 9) vorgesehen sind.

10. Vorrichtung nach einem der vorhergehenden Ansprüche, **dadurch gekennzeichnet, dass** jeweils wenigstens eines der Werkzeuge (6 - 9) zumindest in einer Drehstellung des zugeordneten Positionierwellenendes (16a, 16b) gegenüber dem Bearbeitungswerkzeugkopf (14, 25), zumindest bereichsweise vorsteht.

11. Vorrichtung nach einem der vorhergehenden Ansprüche, **dadurch gekennzeichnet, dass** wenigstens ein motorischer Antrieb, insbesondere ein elektrischer Antrieb (19, 20) für die Bearbeitungswerkzeuge (6 - 9) vorgesehen sind, mit einer durchgehenden Abtriebswelle mit auf beiden Wellenenden (23, 24) angeordneten Werkzeughaltern für rotierende Bearbeitungswerkzeuge (6 - 9).

12. Vorrichtung nach einem der vorhergehenden Ansprüche, **dadurch gekennzeichnet, dass** auf wenigstens einem Positionierwellenende (16a, 16b) wenigstens zwei motorische Antriebe (19, 20) für Bearbeitungswerkzeuge (6 - 9) vorgesehen sind, welche in Axialrichtung der Positionierwelle (16) hintereinander angeordnet und mit ihren Werkzeugachsen in einem Winkel, vorzugsweise im rechten Winkel, zueinander ausgerichtet sind.

13. Vorrichtung nach einem der vorhergehenden Ansprüche, **dadurch gekennzeichnet, dass** die Positionierung der Positionierwelle (16) CNC-gesteuert erfolgt.

14. Vorrichtung nach einem der vorhergehenden Ansprüche, **dadurch gekennzeichnet, dass** wenigstens zwei Bearbeitungsköpfe (14, 25) zur vorzugsweise gleichzeitigen Bearbeitung der Ecken und/oder der Seitenprofile des Rahmens (9) vorgesehen sind.

## Claims

1. Device for machining frames welded from profile pieces (1, 2, 3, 4), such as window or door frames (5) made of plastic, having at least one machining head (14, 25) and machining tools (6, 7, 8, 9; 10, 11, 12, 13) arranged thereon which can be advanced to the respective machining position on the frame (5), wherein the machining head (14, 25) is pivotable about an axis (15) and has a positioning shaft (16) which is arranged at an angle to the pivot axis (15) and on which the machining tools (7 - 13) are arranged, **characterized in that** the positioning shaft (16) extends on both sides of the machining head (14, 25) with machining tools (7 - 13) at both end regions (16a, 16b) of the positioning shaft (16), wherein the axes (21, 22) of the machining tools (7 - 13) are oriented perpendicularly to the axis of the positioning shaft (16).

2. Device according to Claim 1, **characterized in that** the positioning shaft (16) with machining tools (7 - 13) arranged thereon can be positioned in the direction of rotation by means of an actuator (26).

3. Device according to Claim 1 or 2, **characterized in that** the pivot axis (15) and the axis of the positioning shaft (16) are oriented substantially perpendicularly to one another.

4. Device according to one of the preceding claims, **characterized in that** the positioning shaft (16) has a pivot axis (38) for pivoting the positioning shaft (16).

5. Device according to one of the preceding claims, **characterized in that** the pivot axis (15) is oriented perpendicularly to the clamping plane for the frame and the axis of the positioning shaft (16) is oriented parallel to the clamping plane.

6. Device according to one of the preceding claims, **characterized in that** the machining head (14) can be moved in three axes (X, Y, Z), preferably on a carriage (36) which can be moved in three axes (X, Y, Z).

7. Device according to one of the preceding claims, **characterized in that** the positioning shaft (16) is designed to be adjustable in its axial direction relative to the machining head (14, 25).

8. Device according to one of the preceding claims, **characterized in that** the tools (7 - 13) are arranged on tool carriers (17, 18) arranged on both positioning shaft ends (16a, 16b).

9. Device according to one of the preceding claims, **characterized in that** fixed and/or motor-driven tools (10 - 13 or 6 - 9) are provided.

10. Device according to one of the preceding claims, **characterized in that** in each case at least one of the tools (6 - 9), at least in a rotational position of the assigned positioning shaft end (16a, 16b), projects at least in certain regions with respect to the machining tool head (14, 25).

11. Device according to one of the preceding claims, **characterized in that** at least one motorized drive, in particular an electric drive (19, 20), is provided for the machining tools (6 - 9), with a continuous output shaft having tool holders, which are arranged on both shaft ends (23, 24), for rotating machining tools (6 - 9).

12. Device according to one of the preceding claims, **characterized in that** on at least one positioning shaft end (16a, 16b) there are provided at least two motorized drives (19, 20) for machining tools (6 - 9) which are arranged behind one another in the axial direction of the positioning shaft (16) and are oriented with their tool axes at an angle, preferably at a right angle, to one another.

13. Device according to one of the preceding claims, **characterized in that** the positioning of the positioning shaft (16) occurs under CNC control.

14. Device according to one of the preceding claims, **characterized in that** at least two machining heads (14, 25) are provided for the preferably simultaneous machining of the corners and/or the side profiles of the frame (9).

## Revendications

1. Dispositif d'usinage de cadres, par exemple de cadres de fenêtre ou de porte (5) en matière plastique, soudés à partir de pièces profilées (1, 2, 3, 4), avec au moins une tête d'usinage (14, 25) et des outils d'usinage (6, 7, 8, 9 ; 10, 11, 12, 13) disposés sur celle-ci, lesquels peuvent être avancés sur le cadre (5) dans la position d'usinage respective, la tête d'usinage (14, 25) pouvant pivoter autour d'un axe (15) et comportant un arbre de positionnement (16) disposé selon un angle par rapport à l'axe de pivotement (15), sur lequel les outils d'usinage (7 - 13) sont disposés, **caractérisé en ce que** l'arbre de positionnement (16) s'étend des deux côtés de la tête d'usinage (14, 25) avec des outils d'usinage (7 - 13) sur les zones d'extrémité (16a, 16b) de l'arbre de positionnement (16), les axes (21, 22) des outils d'usinage (7 - 13) étant orientés perpendiculairement à l'axe de l'arbre de positionnement (16).

2. Dispositif selon la revendication 1, **caractérisé en ce que** l'arbre de positionnement (16) avec des outils d'usinage (7 - 13) disposés sur celui-ci peut être positionné dans la direction de rotation au moyen d'un entraînement de réglage (26).

3. Dispositif selon la revendication 1 ou 2, **caractérisé en ce que** l'axe de pivotement (15) et l'axe de l'arbre de positionnement (16) sont orientés sensiblement perpendiculairement l'un par rapport à l'autre.

4. Dispositif selon l'une des revendications précédentes, **caractérisé en ce que** l'arbre de positionnement (16) comporte un axe de pivotement (38) destiné à faire pivoter l'arbre de positionnement (16).

5. Dispositif selon l'une des revendications précédentes, **caractérisé en ce que** l'axe de pivotement (15) est orienté perpendiculairement au plan de serrage pour le cadre et l'axe de l'arbre de positionnement (16) est orienté parallèlement au plan de serrage.

6. Dispositif selon l'une des revendications précédentes, **caractérisé en ce que** la tête d'usinage (14) peut être déplacée dans trois axes (X, Y, Z), de préférence est maintenue sur un chariot (36) pouvant être déplacé dans trois axes (X, Y, Z).

7. Dispositif selon l'une des revendications précédentes, **caractérisé en ce que** l'arbre de positionnement (16) est formé de manière ajustable dans sa direction axiale par rapport à la tête d'usinage (14, 25).

8. Dispositif selon l'une des revendications précédentes, **caractérisé en ce que** les outils (7 - 13) sont disposés sur des supports d'outil (17, 18) disposés sur les deux extrémités (16a, 16b) d'arbre de positionnement.

9. Dispositif selon l'une des revendications précédentes, **caractérisé en ce que** des outils (10 - 13 ou 6 - 9) stationnaires et/ou entraînés de manière motorisée sont prévus.

10. Dispositif selon l'une des revendications précédentes, **caractérisé en ce que** respectivement au moins un des outils (6 - 9) fait saillie au moins par endroits au moins dans une position de rotation de l'extrémité (16a, 16b) associée d'arbre de positionnement par rapport à la tête (14, 25) d'outil d'usinage.

11. Dispositif selon l'une des revendications précédentes, **caractérisé en ce qu'**au moins un entraînement motorisé, en particulier un entraînement électrique (19, 20), est prévu pour les outils d'usinage (6 - 9), avec un arbre de sortie continu avec des porte-outils disposés sur les deux extrémités (23, 24) d'arbre pour des outils d'usinage (6 - 9) rotatifs.

12. Dispositif selon l'une des revendications précédentes, **caractérisé en ce que** sont prévus, sur au moins une extrémité (16a, 16b) d'arbre de positionnement, au moins deux entraînements motorisés (19, 20) pour des outils d'usinage (6 - 9), qui sont disposés les uns derrière les autres dans la direction axiale de l'arbre de positionnement (16) et sont orientés les uns par rapport aux autres avec leurs axes d'outil selon un angle, de préférence à angle droit.

13. Dispositif selon l'une des revendications précédentes, **caractérisé en ce que** le positionnement de l'arbre de positionnement (16) est effectué par commande numérique par ordinateur.

14. Dispositif selon l'une des revendications précédentes, **caractérisé en ce qu'**au moins deux têtes (14, 25) d'usinage sont prévues pour usiner de préférence simultanément les coins et/ou les profilés latéraux du cadre (9).
